# EUROPEAN PATENT APPLICATION

(11) **EP 2 031 680 A1**
(43) Date of publication of application: **04.03.2009**
(21) Application number: 08161392.9
(22) Date of filing: 29.07.2008
(51) Int. Cl.: H01M 4/86, H01M 8/12

(54) **High strength support for solid oxide fuel cell**

(30) Priority: 14.08.2007 US 891931
(71) Applicant: Delphi Technologies, Inc., Troy, Michigan 48007 (US)
(72) Inventor: Jain, Kailash C., Troy, MI 48098 (US); Parsian, Mohammad, Swartz Creek, MI 48473 (US); Gillispie, Bryan A., Macomb Township, MI 48044 (US); Keller, Joseph M., Grand Blanc, MI 48439 (US); Kerr, Rick D., Fenton, MI 48430 (US)
(74) Representative: Denton, Michael John

(57) **Abstract**

An anode for use in an anode-supported planar solid oxide fuel cell (SOFC) is formed from a Ni-YSZ cermet composition that includes a sintering aid selected from the group consisting of an oxide, a carbonate, and mixtures thereof of at least one metal of Group 2 of the Periodic Table.

## Description

### TECHNICAL FIELD

The present invention relates to solid oxide fuel cells (SOFC) and, more particularly, to anode compositions that are useful in anode-supported planar solid oxide fuel cells and include a sintering aid.

### BACKGROUND OF THE INVENTION

Fuel cells that generate electric current by the electrochemical combination of hydrogen and oxygen are well known. In one form of such a fuel cell, an anodic layer and a cathodic layer are separated by an electrolyte formed of a ceramic solid oxide. Such a fuel cell is known in the art as a "solid oxide fuel cell" (SOFC). Hydrogen, either pure or reformed from hydrocarbons, is flowed along the outer surface of the anode and diffuses into the anode. Oxygen, typically from air, is flowed along the outer surface of the cathode and diffuses into the cathode. Each O₂ molecule is split and reduced to two O⁻² anions catalytically by the cathode. The oxygen anions transport through the electrolyte and combine at the anode/electrolyte interface with four hydrogen ions to form two molecules of water. The anode and the cathode are connected externally through a load to complete a circuit whereby four electrons are transferred from the anode to the cathode. When hydrogen is derived from "reformed" hydrocarbons, the "reformate" gas includes CO, which is converted to CO₂ at the anode via an oxidation process similar to that performed on the hydrogen. Reformed gasoline is a commonly used fuel in automotive fuel cell applications.

A single cell is capable of generating a relatively small voltage and wattage, typically between about 0.5 volt and about 1.0 volt, depending upon load, and less than about 2 watts per cm² of cell surface. Therefore, in practice it is usual to stack together, in electrical series, a plurality of cells.

In an "anode-supported" fuel cell, the anode is typically a bilayer structural element having the electrolyte and cathode deposited upon it. Each anode and cathode is in direct chemical contact with its respective surface of the interposed electrolyte.

Planar solid oxide fuel cells (SOFC) typically use a thin electrolyte such as, for example, zirconia doped with yttria (YSZ), which is supported by a Ni-YSZ cermet that also acts as the anode [cf. A. Atkinson, S. Barnett, R.J. Gorte, J.T.S. Irvine, A.J. McEvoy, M. Mogensen, S.C. Singhal, and J. Vohs, "Advanced anodes for high-temperature fuel cells," Nature Materials, vol. 3 pp. 17-27 2004.]. Although Ni-YSZ cermet has many desirable properties, as described in U.S. Pat. No. 3,558,360, the disclosure of which is incorporated herein by reference, it exhibits poor mechanical strength and is prone to significant loss of Ni during high temperature (1400°C -1450°C) sintering [cf. D. Waldbillig, A. Wood, and D.G. Ivey, "Thermal analysis of the cyclic reduction and oxidation behaviour of SOFC anodes," Solid State Ionics, 176, pp. 847-859, 2005]. This limits the minimum thickness of the anode to about 0.5 mm for safe handling. Even at 0.5 mm thickness, the mechanical and flexural strength is marginal, being prone to breakage during handling and having a low tolerance to thermal cycling [cf. G. Robert, A. Kaiser, E. Batawi, "Anode Substrate Design for RedOx-stable ASE cell," 6th Eur. SOFC Forum, Lucerne, Vol. 1, pp. 193-200, 2004. B. Liu, Y. Zhang, B. Tu, Y. Dong, and M. Cheng, "Electrochemical impedance investigation of the redox behaviour of a Ni-YSZ anode," Journal of Power Sources, vol. 165, pp. 114-119, 2007].

In order to reduce anode support-related problems such as poison resistance, redox tolerance and electrolyte anode interface integrity, it would be desirable to reduce the thickness of the anode bilayer. Thinner bilayers would also enable a reduction in the size of the fuel cell stack. Thus, there is a need for Ni-YSZ anode support material whose characteristics are suitable for the production of robust bilayer plates. It would be especially desirable that a new Ni-YSZ support material be about 50% stronger, with similar electrochemical performance, i.e., power generating capability, when compared to current state-of-the-art material. Such a material would allow a substantial reduction in the thickness of the anode, resulting in cost savings, higher scaling capability, and improved performance.

### SUMMARY OF THE INVENTION

The present invention is directed to an anode for use in an anode-supported planar solid oxide fuel cell (SOFC). The anode comprises a Ni-YSZ cermet composition that includes a sintering aid selected from the group consisting of an oxide, a carbonate, and mixtures thereof of at least one metal of Group 2 of the Periodic Table.

### BRIEF DESCRIPTION OF THE DRAWINGS

The present invention will now be described, by way of example, with reference to the accompanying drawings.

FIG. 1 schematically depicts a bilayer anode and supported electrolyte layer for a planar SOFC.

FIG.2 depicts X-ray diffraction patterns of Ni-YSZ anode compositions with and without added dolomite.

FIG. 3 depicts the power density performance of button cells with and without added dolomite as an anode sintering aid.

### DESCRIPTION OF THE PREFERRED EMBODIMENTS

The sintering aid included in the Ni-YSZ cermet comprising the anode of the present invention enables the sintering temperature to be lowered, resulting in less Ni loss from the anode. Inclusion of the sintering aid also beneficially increases the flexural strength of the anode, allowing for a reduction in its thickness.

As noted above, the sintering aid is selected from the group consisting of an oxide, a carbonate, and mixtures thereof of at least one metal of Group 2 of the Periodic Table. The oxides, carbonates, and mixtures thereof are derived from metals of Group 2 of the Periodic Table, preferably Ca, Mg, Sr, and Ba, more preferably, Ca, Mg, and mixtures thereof. More preferably, the sintering aid comprises CaO, MgO, and mixtures thereof. Preferred mixtures of CaO and MgO range from about 2:1 CaO:MgO to about 1:10 CaO:MgO by weight.

A particularly preferred sintering aid is dolomite, a well known mineral that is commonly used as a catalyst for tar decomposition [cf. C. Myren, C. Hornell, E. Bjornbom, K.Sjostrom, "Catalytic tar decomposition of biomass pyrolysis gas with a combination of dolomite and silica" Biomass Bioenergy, vol. 23, pp. 217-227, 2002; J. Srinakruang, K. Sato, T. Vitidsant, and K. Fujimoto, "Highly efficient sulfur and coking resistance catalysts for tar gasification with steam," Fuel, vol. 85, pp. 2419-2426, 2006; P.A. Simell, J.K. Leppalahti, and E.A. Kurkela, "Tar-decomposing activity of carbonate rocks under high CO2 partial pressure, "Fuel, vol. 74, pp. 938-945, 1995].

Dolomite mineral is characterized by the general formula CaCO₃·MgCO₃, with trace amounts of other impurities (Ca, Mg, Fe, Si, Al, Ti, Mn)₂ (CO₃)₂. For use in the present invention, the dolomite is preferably calcined by heating at a temperature of about 1200°C.

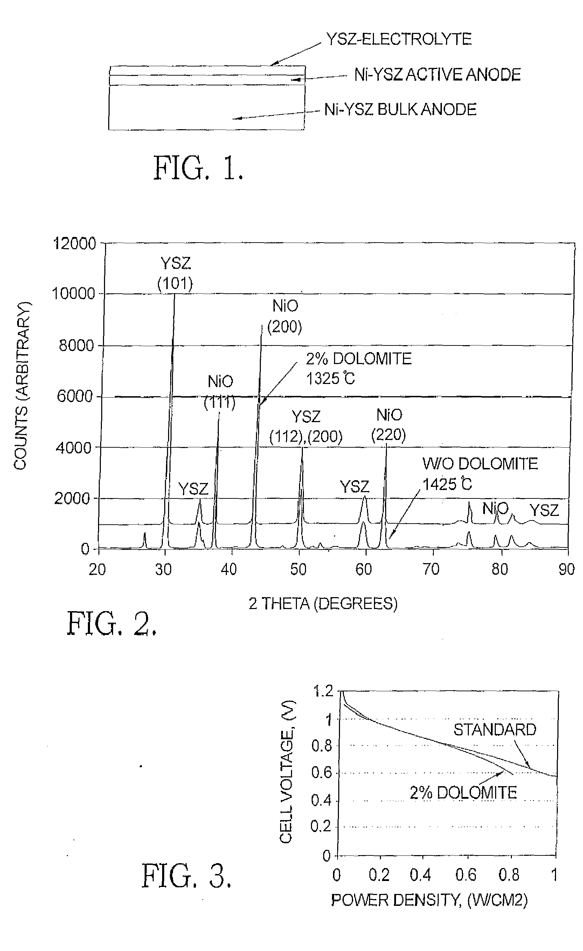

FIG. 1 schematically depicts a bilayer anode for a planar SOFC that comprises a Ni-YSZ active anode and a Ni-YSZ bulk anode, on which is supported a YSZ electrolyte and a cathode (not shown). Typically, the YSZ electrolyte and Ni-YSZ active anode layers each has a thickness of about 5-15 µm. Prior art bulk Ni-YSZ anodes have thicknesses on the order of about 450 µm. Inclusion of a sintering agent in the anode composition enables a reduction in the thickness of a bilayer anode to a thickness in the range of about 250-350 µm, even while providing a robust support structure with high flexural strength.

The composition of calcined dolomite employed in the preparation of the anodes as described below was analyzed by Energy Dispersive X-ray Fluorescence (EDXRF) spectrometry. The analytical results are summarized in TABLE 1 following:

**TABLE 1**

| **Compound/Element** | **%** | **ppm** |
|---|---|---|
| CaO | 66.2 | |
| MgO | 32.3 | |
| Al₂O₃ | 0.37 | |
| Na₂O | 0.34 | |
| SiO₂ | 0.26 | |
| Fe₂O₃ | 0.24 | |
| MnO | | 630 |
| K₂O | | 595 |
| Ni | | 591 |
| Zr | | 294 |
| SiO₂ | | 209 |
| Sr | | 136 |
| Cl | | 97 |
| | | |
| Sub-Totals | 99.71 | 2552 |
| | | |
| Total | 99.97% | |

To demonstrate the effect of dolomite as a sintering aid, NiO-YSZ cermet samples were prepared from green tapes that were subsequently cut to size and sintered. NiO and YSZ can be mixed in specified ratios to achieve an amount of Ni necessary for a desired electronic conductivity in the anode. A composition suitable for the preparation of an active anode layer preferably contains about 5- 20 vol.% YSZ, about 30-45 vol.% NiO, and about 50 vol.% binder. For the preparation of the bulk anode layer, carbon in the amount of about15-20 vol% may be added to the NiO-YSZ-binder active anode composition. Varying amounts of sintering aid, from about 0.1 wt.% to about 30 wt.%, more preferably about 1 wt.% to about 2 wt.%, are added to the anode compositions.

The tapes were cast and laminated to achieve desired thicknesses, and samples were sintered at 1325°C and 1425°C. Layers of the NiO-YSZ-binder active anode composition were subjected to X-ray diffraction analysis. As shown by the X-ray diffraction patterns depicted in FIG. 2, inclusion of 2 wt.% dolomite in the anode composition layer sintered at 1325°C produces sharp and narrow peaks, as compared to the layer containing no dolomite that was sintered at 1425°C. Further, the spectrum of the dolomite-containing material contained no additional peaks that would indicate formation of new phases. Inclusion of 5 wt.% dolomite in the anode composition enables the sintering temperature to be beneficially further reduced to 1200°C.

A substantial loss of Ni from the surface of the anode would require additional processing to restore anode surface conductivity. TABLE 2 shows that the inclusion of dolomite in the anode composition is also effective for preventing the loss of nickel from the surface of a Ni-YSZ cermet during sintering. The concentrations of Ni at the center and at the surface of sintered 2-mm thick layers of Ni-YSZ compositions containing varying amounts of dolomite were determined using scanning electron microscopy in the energy dispersive mode, and the results were normalized to a concentration of 32 wt.% in the middle of the layer.

As the data in TABLE 2 indicate, inclusion of as little as1.0 wt.% of dolomite in the anode composition very substantially reduces the loss of Ni from the surface of the cermet layer to its surroundings, enabling an effective and economic utilization of nickel that avoids the need for an additional conductive surface Ni layer.

**TABLE 2**

| **Dolomite wt.%** | **Ni concentration in center, wt. %** | **Ni concentration on surface, wt. %** |
|---|---|---|
| 0 | 32 | 15 |
| 1 | 32 | 25 |
| 2 | 32 | 26 |

Improved mechanical strength of the anode bilayer is key to making a compact, light, and low cost fuel cell. The effect of the sintering aid of the present invention on flexural strengths on various layers is shown in TABLE 3 below.

Test structures were prepared in which the component layers had the following thicknesses: electrolyte layer, 10-14 µm; active anode layer, 10-12 µm; bulk anode layer, 260 µm. The results summarized in TABLE 3 below were obtained with samples having a total thickness (S) of about 283 µm.

The flexural strength (σ) of a sample with thickness (S) is determined by applying a load (P, expressed in Newtons) to failure, followed by calculation using the formula σ = 1.08 P/S².

As shown by the data in TABLE 3, addition of 1 wt.% dolomite in both the active and bulk anode layers resulted in a >70% increase in flexural strength, which may allow for a reduction in bilayer thickness down to as low as about 0.3 mm while maintaining adequate mechanical strength.

**TABLE 3**

| **Dolomite wt. %** | **Dolomite in active anode layer** | **Dolomite in bulk anode layer** | **Flexural strength MPa** |
|---|---|---|---|
| 0 | | | 118 |
| 1 | Yes | No | 136 |
| 1 | Yes | Yes | 203 |
| 2 | Yes | No | 147 |
| 5 | No | Yes | 187 |

A comparison of the power output performance of cells containing anode bilayers with and without sintering aid in the active anode is shown in FIG. 3. Button cells having an area of 2.5 cm², constructed with and without the inclusion of 2 wt.% dolomite in the active anode layer were tested at 750°C in 50% H₂ in N₂. The slightly lower performance of the dolomite-containing cell may be attributed to the high sintering temperature required to sinter the electrolyte layer included in the cells, which produced excessive grain growth and densification in the active anode layer. This lowered performance may be remediated by using an electrolyte requiring a lower sintering temperature or by adjusting the level or the composition of the included sintering aid.

While the invention has been described by reference to various specific embodiments, it should be understood that numerous changes may be made within the spirit and scope of the inventive concepts described. Accordingly, it is intended that the invention not be limited to the described embodiments, but will have full scope defined by the language of the following claims.

## Claims

1. An anode for use in an anode-supported planar solid oxide fuel cell (SOFC), said anode comprising a Ni-YSZ cermet composition and a sintering aid selected from the group consisting of an oxide, a carbonate, and mixtures thereof of at least one metal of Group 2 of the Periodic Table.

2. The anode of claim 1 wherein said metal is selected from the group consisting of Ca, Mg, Sr, Ba, and mixtures thereof.

3. The anode of claim 2 wherein said metal is selected from the group consisting of Ca, Mg, and mixtures thereof.

4. The anode of claim 1 wherein said sintering aid comprises dolomite.

5. The anode of claim 1 wherein said sintering aid comprises calcined dolomite.

6. The anode of claim 1 wherein said sintering aid comprises CaO, MgO, and mixtures thereof.

7. The anode of claim 6 wherein said sintering aid comprises a mixture of CaO and MgO in the range of about 2:1 CaO:MgO to about 1:10 CaO:MgO by weight.

8. The anode of claim 1 comprising an active anode layer and a bulk anode layer, said sintering aid being disposed in either or both of said active anode and bulk anode layers.

9. The anode of claim 8 wherein said sintering aid is disposed in both anode layers.

10. The anode of claim 8 wherein said active anode layer and said bulk anode layer have a combined thickness of about 250 µm to about 350 µm.

11. The anode of claim 8 further comprising a YSZ electrolyte layer in direct contact with said active anode layer.

12. The anode of claim 8 sintered at a temperature in the range of about 1200°C to about 1425°C.

13. The anode of claim 1 where said cermet composition comprises about 0.1 wt.% to about to about 30 wt.% of said sintering aid.

14. The anode of claim 13 where said cermet composition comprises about 1 wt.% to about to about 2 wt.% of said sintering aid.

15. The anode of claim 1 wherein said cermet composition further comprises a binder.

16. The anode of claim 15 wherein said cermet composition comprises about 5- 20 vol.% YSZ, about 30-45 vol.% NiO, and about 50 vol.% binder.

17. A solid oxide fuel cell comprising a YSZ electrolyte layer interposed between and in direct chemical contact with a cathode and with an anode of claim 1.
